# EUROPEAN PATENT SPECIFICATION

(11) **EP 3 926 379 B1**
(45) Date of publication and mention of the grant of the patent: **18.11.2026**
(21) Application number: 21188727.8
(22) Date of filing: 26.01.2015
(51) Int. Cl.: G02B 7/08, G02B 27/64, G02B 7/04

(54) **LENS MOVING UNIT AND CAMERA MODULE HAVING THE SAME**
LINSENBEWEGUNGSEINHEIT UND KAMERAMODUL DAMIT
UNITÉ DE DÉPLACEMENT DE LENTILLE ET MODULE DE CAMÉRA LA CONTENANT

(30) Priority: 28.01.2014 KR 20140010534; 11.06.2014 KR 20140070523
(43) Date of publication of application: 22.12.2021
(62) Document number(s) of the earlier application(s) in accordance with Art. 76 EPC: 17180292.9 / 3 260 898; 15152546.6 / 2 899 579
(73) Proprietor: LG INNOTEK CO. LTD, Jung-gu Seoul 04637 (KR)
(72) Inventor: LEE, Kap Jin, 04637 Seoul (KR)
(74) Representative: DREISS Patentanwälte PartG mbB

(56) References cited:
- EP-A1- 2 469 333
- EP-A2- 2 808 717
- US-A1- 2013 016 427
- US-A1- 2013 039 640

## Description

### BACKGROUND OF THE DISCLOSURE

### Field

The teachings in accordance with the exemplary embodiments of this present disclosure generally relate to a lens moving unit and a camera module having the same.

### Background

US 2013/016427 A1 discloses a lens moving unit according to the preamble of claim 1. US 2013/039640 A1 discloses a camera module having a function of compensation for hand shake. EP 2 469 333 A1 discloses a small size, low profile camera-shake correction device. A miniaturized and low power-consuming camera module is difficult to be applied with a VCM (Voice Coil Motor) technology used for a conventional camera module, and therefore researches have been briskly waged to cope with the difficulty mentioned above.

A camera module mounted on a small electronic device such as a smart phone may be frequently applied with a shock during use and may be minutely shaken by a user handshake during photographing. Thus, development for a technology to additionally install handshake shake correction means has been recently required. The handshake shake correction means are variably researched.

One of the handshake shake correction technologies that corrects the handshake by moving an optical module to x, y axes corresponding to a plane perpendicular to an optical axis suffers from disadvantages such as complex structure and inadequacy to miniaturization, because an optical system must be moved and adjusted within the plane perpendicular to the optical axis for image correcti on

### SUMMARY

The present disclosure has been made to solve the foregoing disadvantages of the prior art and therefore an object of certain embodiments of the present disclosure is to provide a lens moving unit configured to miniaturize a camera module and configured to include a handshake correction function for enhancement of operational reliability, and a camera module having the same. Another object of certain embodiments of the present disclosure is to provide a lens moving unit configured to simplify an assembly process and a camera module having the same.

The present disclosure is to solve at least one or more of the above problems and/or disadvantages in whole or in part and to provide at least advantages described hereinafter.

The invention is as defined in claim 1.

Preferable embodiments are defined in the dependent claims.

### ADVANTAGEOUS EFFECTS

The present disclosure can advantageously provide a lens moving unit capable of miniaturizing a camera module by a reduced height and including a handshake correction function capable of improving an operational reliability.

Furthermore, the lens moving unit according to the present disclosure can advantageously improve assemblage by elastically supporting a housing mounted with a plurality of sheets of lenses through integrated support member formed by bending a part of an upper elastic member free from assembly of separate support member.

Still another advantageous effect is that a damping unit capable of reducing a minute vibration generated from a support member is provided to enable a more stable handshake correction control. Still further advantageous effect is that modularization is implemented by installing a circuit board mounted at an inner lateral surface of a cover member with a second coil to further simplify an assembly process.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a schematic perspective view illustrating a lens moving unit;
FIG. 2 is an exploded perspective view of FIG. 1 and is not according to the invention and is present for illustration purposes only;
FIG. 3 is a perspective view removed of a cover member of FIG. 1 and is not according to the invention and is present for illustration purposes only;
FIG. 4 is a perspective view illustrating a bobbin, which is not according to the invention and is present for illustration purposes only;
FIGS. 5 and 6 are a perspective view and a rear perspective view illustrating a housing, which is not according to the invention and is present for illustration purposes only;
FIG.7 is a rear perspective view illustrating a housing coupled by a bobbin and a bottom elastic member, wherein this example is not according to the invention and is present for illustration purposes only;
FIG. 8 is a plane view illustrating an initial state of an upper elastic member, wherein this example is not according to the invention and is present for illustration purposes only;
FIG. 9 is a perspective view illustrating a state where the upper elastic member is divided into first and second upper elastic members according, wherein this example is not according to the invention and is present for illustration purposes only;
FIG. 10 is an enlarged view of a part of FIG. 3, wherein this example is not according to the invention and is present for illustration purposes only;
FIGS. 11 and 12 are perspective views illustrating a state where a base, a circuit board and a second coil are separated;
FIG. 13 is a plane view illustrating a coupled relationship of a second coil coupled to a circuit board, which is not according to the invention and is present for illustration purposes only;
FIG. 14 is a schematic view illustrating a floor surface of a base, which is not according to the invention and is present for illustration purposes only;
FIG. 15 is a cross-sectional view taken along line I-I' of a lens moving unit of FIG. 3;
FIG. 16 is a cross-sectional view taken along line II-II' of a lens moving unit of FIG. 3; and
FIG. 17 is a cross-sectional view taken along line III-III' of a lens moving unit of FIG. 3.

### DETAILED DESCRIPTION

Hereinafter, a lens moving unit according to a first exemplary embodiment will be described in detail with reference to the accompanying drawings.

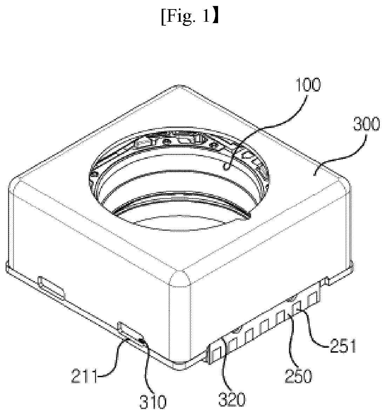

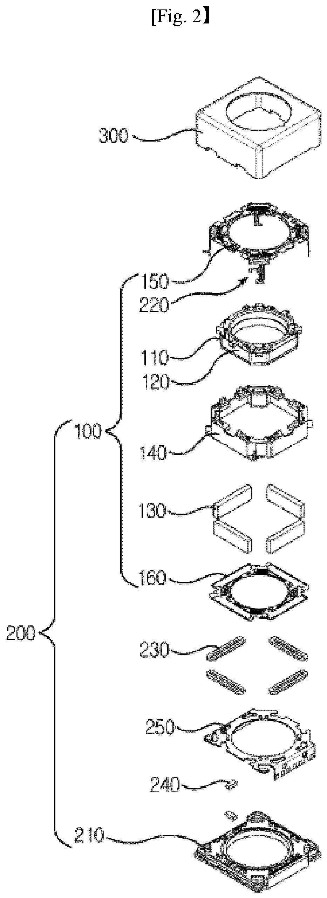

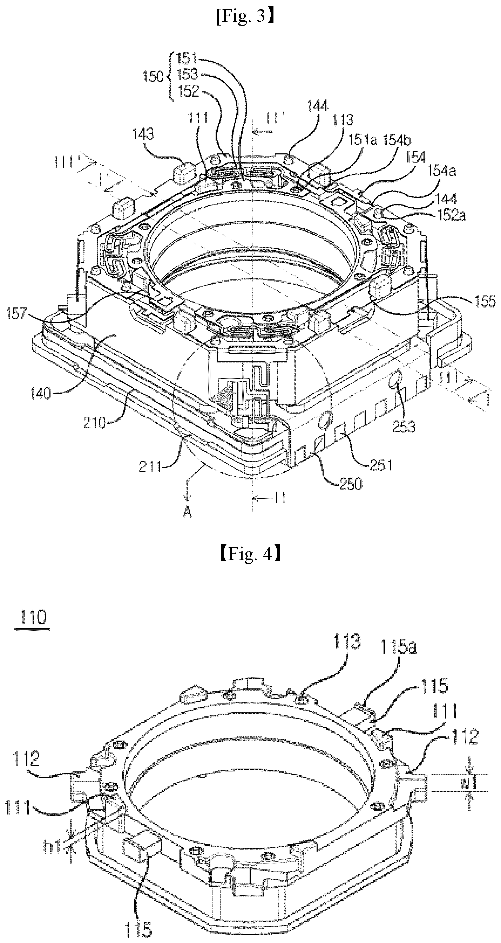

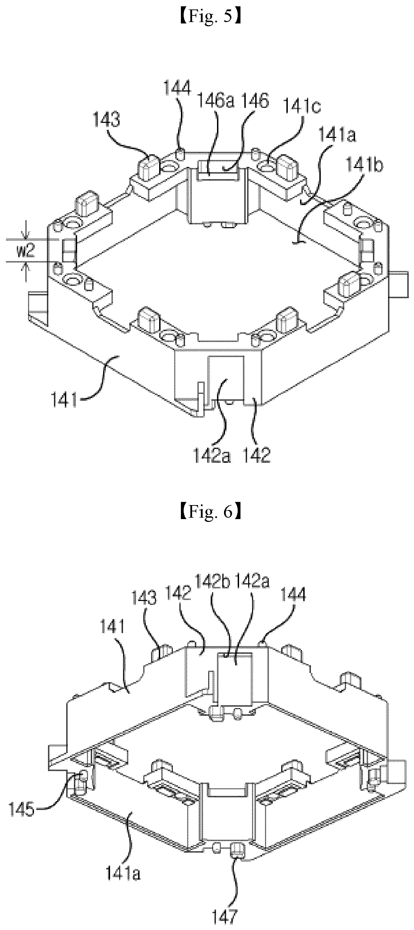

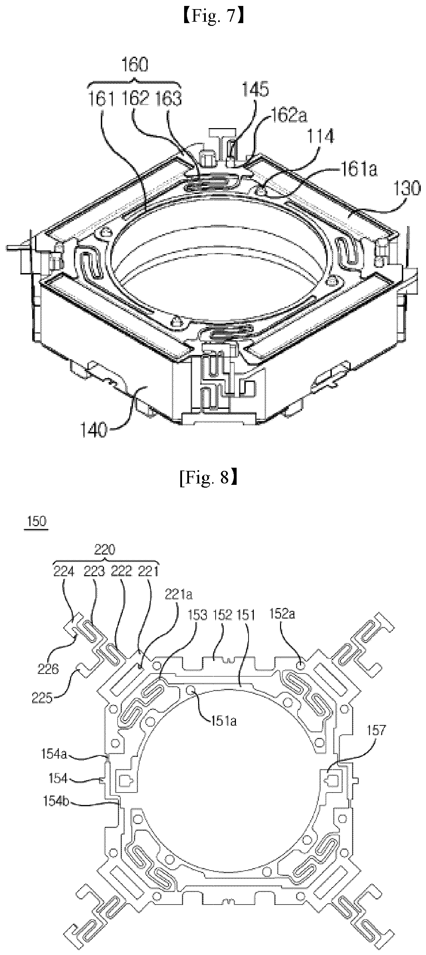

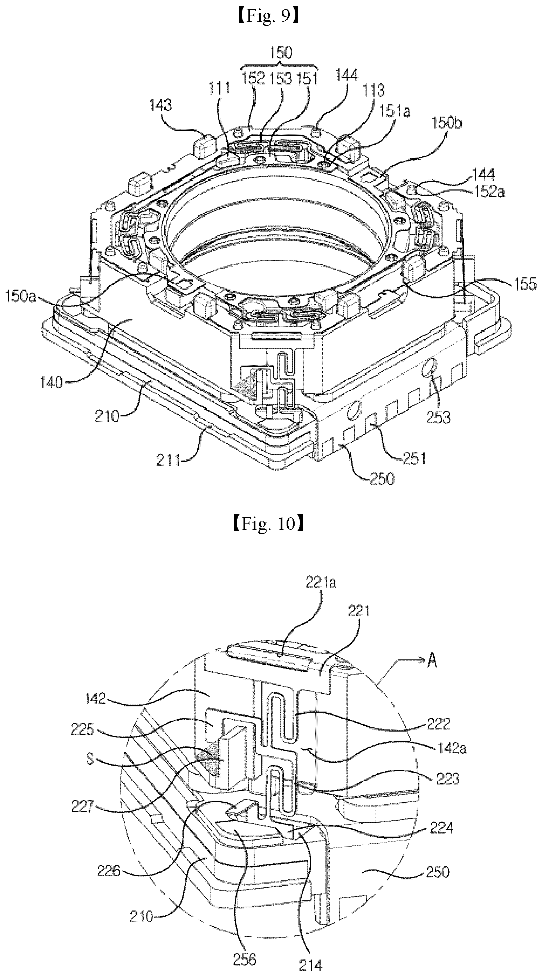

FIG. 1 is a schematic perspective view illustrating a lens moving unit, FIG. 2 is an exploded perspective view of FIG. 1, FIG. 3 is a perspective view removed of a cover member of FIG. 1, FIG. 4 is a perspective view illustrating a bobbin according to an exemplary embodiment of the present disclosure, FIGS. 5 and 6 are a perspective view and a rear perspective view illustrating a housing according to an exemplary embodiment of the present disclosure, FIG.7 is a rear perspective view illustrating a housing coupled by a bobbin and a bottom elastic member according to a first exemplary embodiment of the present disclosure, FIG. 8 is a plane view illustrating an initial state of an upper elastic member according to a first exemplary embodiment of the present disclosure, FIG. 9 is a perspective view illustrating a state where the upper elastic member is divided into first and second upper elastic members according to a first exemplary embodiment of the present disclosure;

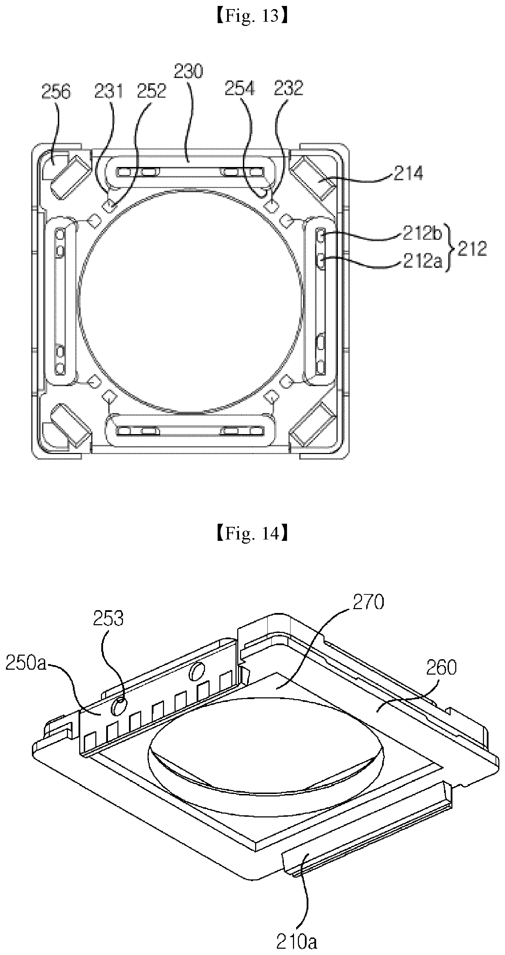

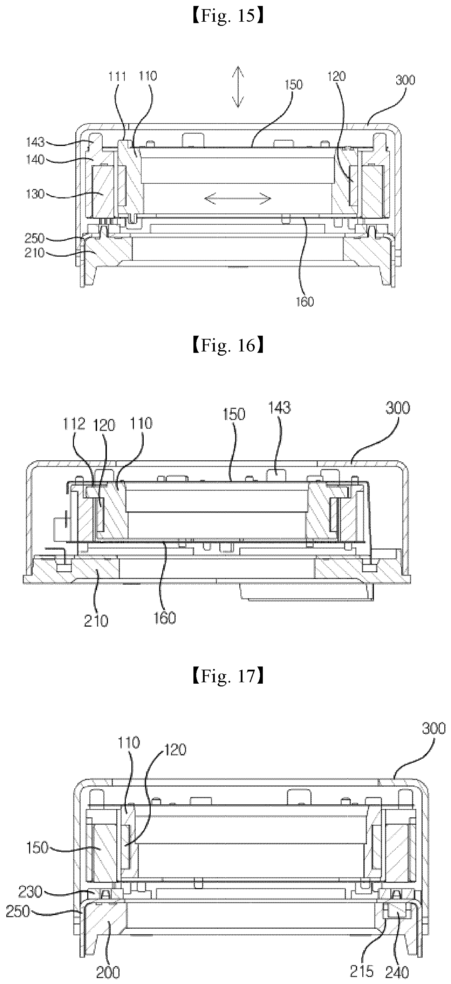

FIG. 10 is an enlarged view of A part of FIG. 3, FIGS. 11 and 12 are perspective views illustrating a state where a base, a circuit board and a second coil are separated according to a first exemplary embodiment of the present disclosure, FIG. 13 is a plane view illustrating a coupled relationship of a second coil coupled to a circuit board according to a first exemplary embodiment of the present disclosure, FIG. 14 is a schematic view illustrating a floor surface of a base according to a first exemplary embodiment of the present disclosure, FIG. 15 is a cross-sectional view taken along line I-I' of a lens moving unit of FIG. 3, FIG. 16 is a cross-sectional view taken along line II-II' of a lens moving unit of FIG. 3, and FIG. 17 is a cross-sectional view taken along line III-III' of a lens moving unit of FIG. 3.

Meantime, a rectangular coordinate system (x, y, and z) is used for FIGS. 1~17. x axis and y axis in the drawings are defined as planes each perpendicular to an optical axis, where an optical axis direction (z direction) is called as a first direction, x axis direction is called as a second direction and y axis direction is called as a third direction, for convenience sake.

A handshake correction device applied to a small-sized camera module in a mobile device such as a smart phone or a tablet PC is a device configured to prevent an outline of a photographed image from being blurred due to vibration generated by handshake of a user during photographing of a stationary image. Furthermore, an auto focusing device is a device configured to automatically capture a focus of an image of an object on an image sensor surface. The handshake correction device and the auto focusing device is variably configured, and the handshake correction and auto focusing devices according to exemplary embodiments of the present disclosure can perform auto focusing and handshake correction operations by moving an optical module formed with a plural sheet of lenses to a surface perpendicular to an optical axis.

Referring to FIGS. 1 and 2, a lens moving unit according to an exemplary embodiment of the present disclosure may include a first lens moving unit (100) and a second lens moving unit (200). At this time, the first lens moving unit (100) is a lens moving unit for auto focusing, and the second lens moving unit (200) is a lens moving unit for handshake correction. Referring to FIGS. 2 and 3, the first lens moving unit (100) may include a bobbin (110), a first coil (120), a magnet (130) and a housing (140).

The bobbin (110) is reciprocally mounted to a direction parallel to an optical axis in an inner space of the housing (140). The bobbin (110) is formed at a periphery with a first coil (120, described later) to enable an electronic interaction with the magnet (130). Furthermore, the bobbin (110) may perform an auto focusing function by being electrically supported by upper and bottom elastic members (150, 160) to move to the first direction parallel to the optical axis.

Although not illustrated in the drawings, the bobbin (110) may include therein a lens barrel (not shown) mounted with at least one lens. The lens barrel is variably coupled to an inner side of the bobbin (110). For example, an inner circumferential surface of the bobbin (110) is formed with a female screw thread, and a periphery of the lens barrel is formed with a male screw thread corresponding to the female screw thread, and the lens barrel can be coupled to the bobbin (110) by the screw connection of the female and male screw threads.

The present disclosure is not limited thereto, and instead of forming a screw thread at an inner circumferential surface of the bobbin (110), the lens barrel is directly fixed to an inside of the bobbin (110) by other methods than the screw connection. Alternatively, one or more sheets is integrally formed with the bobbin (110) free from the lens barrel. The optical system is formed with one sheet of lens or two or more sheets of lenses coupled to the lens barrel. Meantime, the bobbin (110) may include a first stopper (111) and/or a second stopper (112).

The first stopper (111) can prevent an upper side surface of the bobbin (110) body from directly colliding with an inner lateral surface of the cover member (300, illustrated in FIGS. 1 and 15), even if the bobbin (110) moves over a regulated scope due to outside shock when the bobbin (110) moves to the first direction parallel to the optical axis for performing the auto focusing function. Furthermore, the first stopper (111) may also function to guide an installation position of the upper elastic member (150).

Referring to FIG. 4, a plurality of first stoppers (111) according to the exemplary embodiment of the present disclosure is protrusively formed upwards each at a first height (h1), where at least four first stoppers (111) is protrusively formed in a shape of a polygonal pillar. The first stopper (111) is symmetrically provided relative to a center of the bobbin (110), and is also provided in a non-symmetrical structure where interference with the other parts is ruled out as illustrated in FIG. 4.

The second stopper (112) can prevent a floor surface of the bobbin (110) body from directly colliding with a base (210, illustrated in FIGS. 2 and 16) and an upper surface of a circuit board (250) even if the bobbin (110) moves over a regulated scope due to outside shock when the bobbin (110) moves to the first direction parallel to the optical axis for performing the auto focusing function. Furthermore, the second stopper (112) is protrusively formed at a corner area of the bobbin (110) to a circumferential direction, and the housing (140) is formed at a position opposite to that of the second stopper (112) with a recess groove (146).

When a mutually-contacted state of the second stopper (112) and a floor surface (146a, see FIG. 5) of the recess groove (146) is configured as an initial position, the auto focusing function is performed in such a manner that the bobbin (110) lifts up when a current is supplied to the first coil (120) as in the single direction control of the conventional VCM, and the bobbin (120) lifts down when the current is turned off.

When a configuration is provided as an initial position where the second stopper (112) and the floor surface (146a, see FIG. 5) of the recess groove (146) are mutually spaced apart at a predetermined distance, the auto focusing function is performed in such a manner that control is made in response to a current direction as a bi-directional control in the conventional VCM, and the bobbin (120) moves to an upward direction or a downward direction perpendicular to the optical axis. For example, a forward current is supplied, the bobbin (110) may move upwards, and when a backward current is supplied, the bobbin (110) may move downwards.

Meantime, the recess groove (146) of the housing (140) corresponding to the second stopper (112) is concavely formed with a second width (w2) {corresponding to a first width (w1)} having a predetermined allowance from the first width (w1) of the second stopper (112), the second stopper (112) is restricted from rotating inside the recess groove (146). Then, the second stopper (112) can prevent the bobbin (110) from rotating even if the bobbin (112) rotates to a direction about an optical axis, instead of an optical direction.

Furthermore, an upper surface and a bottom surface of the bobbin (110) is protrusively formed with a plurality of upper support protrusions (113) and a plurality of bottom support protrusions (114, see FIG. 7). Referring to FIG. 3, the upper support protrusion (113) is provided in a cylindrical shape or an angular pillar shape, and may couple and fix an inner lateral frame (151) of the upper elastic member (150) to the bobbin (110). A first through hole (151a) is formed at a position opposite to that of the upper support protrusion (113) of the inner lateral frame (151) according to an exemplary embodiment of the present disclosure.

At this time, the upper support protrusion (113) and the first through hole (151a) may be fixed by thermal bonding or may be fixed by an adhesive member such as an epoxy. Furthermore, as illustrated in FIGS.3 and 4, a plural number of upper support protrusions (113) is formed. At this time, a distance between the upper support protrusions (113) is adequately arranged within a scope avoidable of interference of adjacent parts. That is, each upper support protrusion (113) is symmetrically spaced apart from the other at a predetermined distance about the bobbin (110), or may be symmetrically formed about a particular imaginary line passing a center of the bobbin (110).

Now, referring to FIG. 7, the bottom support protrusion (114) is provided in a cylindrical shape or an angular pillar shape like the upper support protrusion (113), and may couple and fix an inner lateral frame (161) of the bottom elastic member (160) to the bobbin (110). A second through hole (161a) is formed at a position opposite to that of the bottom support protrusion (114) of the inner lateral frame (161) according to an exemplary embodiment of the present disclosure.

At this time, the bottom support protrusion (114) and the second through hole (161a) is fixed by thermal bonding or is fixed by an adhesive such as an epoxy. Furthermore, as illustrated in FIG. 7, a plural number of bottom support protrusions (114) is formed. At this time, a distance between the bottom support protrusions (114) is adequately arranged within a scope avoidable of interference of adjacent parts. That is, each bottom support protrusion (114) is symmetrically spaced apart from the other at a predetermined distance about the bobbin (110).

Meantime, as illustrated in FIG. 7, the number of bottom support protrusions (114) is smaller than that of the upper support protrusions (113), which is due to the different shapes between the upper elastic member (150) and the bottom elastic member (160). That is, as illustrated in FIG. 4, each of the upper elastic members (150) must be formed in a mutually bisected electrically non-connected structure to allow each member to function as a terminal for applying a current to the first coil (120) and a sufficient number of upper support protrusions (113) is fixedly provided to prevent the upper elastic members (150) from incompletely coupled with the bobbin (110).

Meanwhile, as illustrated in FIG. 6, the bottom elastic member (160) is formed in one body to allow stable coupling even with only a fewer number of bottom support protrusions (114) than that of the upper elastic member (150). Furthermore, in contrary to the exemplary embodiment, each of the bottom elastic members (160) may be formed in a mutually bisected electrically non-connected structure to allow each member to function as a terminal for applying a current to the first coil (120), where the upper elastic members (150) is formed in one body.

Furthermore, two winding protrusions (115) are provided at an upper peripheral surface of the bobbin (110). The winding protrusion (115) is respectively wound by both distal ends of the first coil (120), where a conductible connection with a pair of solder units (157) provided at the upper elastic member (150) can be realized. The winding protrusion (115) is arranged in a pair at a horizontally symmetrical position about the bobbin (110).

Furthermore, the soldering coupling of the first coil (120) wound on the winding protrusion (115) at the solder unit (157) also functions to tightly couple the inner lateral frame (151) of the upper elastic member (150) to an upper side surface of the bobbin (110) without any floating. A distal end of the winding protrusion (115) is formed with a staircase (115a) to prevent both end lines of the wound first coil (120) from being separated. The first coil (120) is provided in a ring-shaped coil block insertedly coupled to a periphery of the bobbin (110). However, the present disclosure is not limited thereto, and the first coil (120) is directly wound on the periphery of the bobbin (110).

In the exemplary embodiment of the present disclosure, the first coil (120) is formed in an approximately octagonal shape, the shape of which corresponds to that of the periphery of the bobbin (110), where the bobbin (120) is also provided in an octagonal shape. Furthermore, the first coil (120) is provided with at least four surfaces with a straight line, and a corner area connecting the four surfaces are round or straight. At this time, a part formed with a straight line is a surface opposite to the magnet (130).

Furthermore, a surface of the magnet (130) opposite to the first coil (120) may have a same curvature as that of the first coil (120). That is, when the first coil (120) is a straight line, a surface of the magnet (130) opposite to the first coil (120) is a straight line, and when the first coil (120) is a curved line, a surface of the magnet (130) opposite to the first coil (120) is a curved line. Furthermore even if the first coil (120) is a curved line, a surface of magnet (130) opposite to the first coil (120) is a straight line, and vice versa.

The first coil (120) performs an auto focusing function by moving the bobbin (110) to a direction parallel with the optical axis, and when a current is supplied to the magnet (130), an electromagnetic force can be formed through interaction with the magnet (130) and the formed electromagnetic force can move the bobbin (110).

Meantime, the first coil (120) is formed opposite to the magnet (130), and when the magnet (130) is formed in one body to allow an entire surface opposite to the first coil (130) to have a same polarity, the first coil (130) may also have the same polarity at a surface opposite to the magnet (130). Meantime, although not described, when the magnet (130) is bisected at a surface perpendicular to the optical axis to allow a surface opposite to the first coil (130) to be divided to two or more sections, the first coil (130) may also be divided in the number corresponding to that of divided magnet (130).

The magnet (130) is mounted at a position opposite to that of the first coil (130). In the exemplary embodiment of the present disclosure, the magnet (130) is installed at a position corresponding to that of the first coil (120) of the housing (140) as illustrated in FIG. 2. The magnet (130) is configured in one body, and the magnet (130) according to the exemplary embodiment of the present disclosure is arranged with an N pole at a surface opposite to the first coil (120) with an S pole at an outside surface. The present disclosure is not limited thereto, and the reverse is also possible. Furthermore, as explained above, the magnet (130) is bisected on a plain surface perpendicular to the optical axis.

At least two magnets (130) are installed and four magnets (130) are installed according to the exemplary embodiment of the present disclosure. At this time, the magnet (130) is formed in a shape of a rectangular parallelepiped each surface having a predetermined width, and a broad surface is installed on each lateral surface of the housing (140). At this time, the mutually opposite magnets (130) are installed on a parallel base.

Furthermore, the magnet (130) is arranged to face the first coil (120). At this time, each surface on which the magnet (130) and the first coil (120) face each other is arranged in a plain surface to be mutually parallel. The present disclosure is not limited thereto, and any one surface of the magnet (130) and the first coil (120) may have a plain surface, and another surface may be formed in a curved surface. Alternatively, all surfaces surface on which the magnet (130) and the first coil (120) face each other may be arranged in a curved surface. At this time, curvatures of surfaces on which the magnet (130) and the first coil (120) face each other may be same.

When the magnet (130) is arranged in the shape of a rectangular parallelepiped as illustrated, one pair of a plurality of magnets (130) may be parallel arranged to the second direction, and the other pair of magnets may be arranged to the third direction, whereby the moving control of the housing (140) for handshake correction (described later) can be made possible.

The housing (140) may be formed in an approximately square shape, and may be formed an approximately in an octagonal shape as illustrated in FIG. 5 according to the exemplary embodiment of the present disclosure. At this time, the housing (140) may include a first surface (141) and a second surface (142). The first surface (141) is a surface mounted with the magnet (130) and the second surface is a surface mounted with a support member (220, described later).

The first surface (141) is formed flat, and may be formed equal to or greater than that of the magnet (130). At this time, the magnet (130) is fixed to a magnet recess unit (141a) formed at an inner surface of the first surface (141). The magnet recess unit (141a) is formed with a concave groove corresponding in size to the magnet (130), and may be arranged at least at four surfaces opposite to the magnet (130). At this time, a floor surface of the magnet recess unit (141a), that is, a surface opposite to the second coil (230, described later), is formed with an opening (141b) to allow a floor surface of the magnet (130) to directly face the second coil (230). Meantime, the magnet (130) is secured to the magnet recess unit (141a) using an adhesive. However, the present disclosure is not limited thereto, and may be fixed using an adhesive member such as a double-sided tape.

Alternatively, it may be possible to form the magnet recess unit (141a) of a window-shaped recess hole from which a part of the magnet can be exposed or in which a part of the magnet can be inserted, instead of forming the magnet recess unit (141a) in a concave groove as illustrated in FIG. 5. Meantime, an upper surface of the first surface (141) is formed with an adhesive agent inlet hole (141c) configured to infuse epoxy for fixation. According the exemplary embodiment of the present disclosure, the adhesive agent inlet hole (141c) may be provided in a tapering cylindrical shape to infuse an adhesive agent through an exposed upper surface of the housing (140).

The housing (140) is protrusively formed at an upper surface with a plurality of third stoppers (143). The third stopper (143) serves to prevent the cover member (300, described later) from colliding with the housing (140) body, where the upper surface of the housing (140) is prevented from directly colliding with an inner lateral surface of the cover member (300) when there is generated an external shock. Furthermore, the third stopper (143) also functions to guide an installation position of the upper elastic member (150). To this end, the upper elastic member (150) is formed with a guide groove (155) having a shape corresponding to that of the third stopper (143) at a position opposite to that of the third stopper (143).

Meanwhile, the first surface (141) is arranged in parallel with a lateral surface of the cover member (300, described later). Furthermore, the first surface (141) is formed to have a greater surface than that of the second surface (142).

Furthermore, referring to FIGS. 5 and 6, the second surface (142) are concavely formed with an escape groove (142a) having a predetermined depth. At this time, the escape groove (142a) is formed at a floor surface with an opening to prevent a fixation part of bottom lateral unit at the support member (220, described later) from interfering with the housing (140). Furthermore, as illustrated in FIG. 6, the escape groove (142a) is formed at an upper side with a staircase (142b) to support an inner side of an upper lateral part of the support member (220).

Now, referring to FIGS. 3, 5 and 6, the housing (140) is protrusively formed at an upper side with a plurality of upper frame support protrusions (144) coupled by an outer frame (152) of the upper elastic member (150), At this time, the number of upper frame support protrusions (144) is greater than that of upper support protrusion (113), which is because a length of the outer frame (152) is longer than that of the inner frame (151). Meantime, the outer frame (152) opposite to the upper frame support protrusion (144) is formed with a third through hole (152a) having a shape corresponding thereto, where the outer frame (152) is fixed by adhesive agent or heat fusion.

Furthermore, the housing (140) is formed at a bottom side with a plurality of bottom frame support protrusions (145) coupled by an outer frame (162) of the bottom elastic member (160). At this time, the number of bottom frame support protrusion (145) is greater than that of bottom support protrusion (114), which is because a length of the outer frame (162) of bottom elastic member (160) is longer than that of the inner frame (161). Meantime, the outer frame (162) opposite to the bottom frame support protrusion (145) is formed with a fourth through hole (162a) having a shape corresponding thereto, where the outer frame (162) is fixed by adhesive agent or heat fusion.

Furthermore, the housing (140) is protrusively formed at a bottom surface with a fourth stopper (147). The fourth stopper (147) serves to prevent a floor surface of the housing (140) from colliding with the base (210, described later) and/or the circuit board (150). The fourth stopper (147) may also maintain a predetermined distance from the base (210) and/or the circuit board (150) during an initial operation and normal operation, whereby the housing (140) can be distanced downwardly from the base (210) and upwardly distanced from the cover member (300) to maintain an optical axis directional height using a support member (220, described later) free from vertical interference. Thus, the housing (140) can perform a shifting operation to second and third directions which are front, rear, left and right directions on a plane parallel with the optical axis. This operation will be re-described later in more details.

Meantime, lift-up and/or lift-down operations to a direction parallel with the optical axis of the bobbin (110) is elastically supported by the upper and bottom elastic members (150, 160). At this time, the upper and bottom elastic members (150, 160) are provided in leaf springs.

Referring to FIGS. 3 and 7, the upper and bottom elastic members (150, 160) may include inner frames (151, 161) coupled to the bobbin (110), outer frames (152, 162) coupled to the housing (140) and connection units (153, 163) connecting the inner and outer frames (151, 161, 152, 162). The connection units (153, 163) are bent at least once to form a predetermined shape of pattern. The lift-up and/or lift-down operation of the bobbin (110) to the first direction parallel with the optical axis can be elastically supported by position change and fine deformation of the connection units (153, 163).

In the present exemplary embodiment, the upper elastic member (150) is divided to a bisected first upper elastic member (150a) and second upper elastic member (150b), as illustrated in FIG. 9. The first upper elastic member (150a) and second upper elastic member (150b) of the upper elastic member (150) can be applied with mutually different polarities by the bisected structure. That is, as illustrated in FIGS. 3 and 8, a solder unit (157) is provided at a position opposite to that of a pair of winding protrusions (115) wound by both distal ends of the first coil (120) after the inner frames (151) and the outer frames (152) are respectively coupled to the bobbin (110) and the housing (140), where the first upper elastic member (150a) and second upper elastic member (150b) can be applied with mutually different polarities by the solder unit (157) configured to perform a conductive connection using solder and the like.

At this time, the outer frame (152) of the upper elastic member (150) is provided with at least two cut-off pieces (154) to form a one bodily manufactured, assembly-completed upper elastic member (150) to bisected structure. At this time, both distal ends (154a, 154b) of the cut-off piece (154) is formed with a narrower width than that of the outer frame (152) to enable easy cut-off. The both distal ends (154a, 154b) of the cut-off piece (154) thus formed enable an assembly operator to clearly and visually ascertain a cut-out position of the outer frame (152), whereby cut-out can be conveniently performed using a cutting tool. Furthermore, unlike the exemplary embodiment, the cut-out pieces (154) are not formed and mutually separated first and second upper elastic members are separately formed to allow being coupled to the bobbin (110) and the housing (140).

Meanwhile, a corner area of the upper elastic member (150) is integrally formed with the support member (220) to allow the support member (220) to be bent to a direction parallel with an optical axis before or after the assembly step as shown in FIG. 8. However, the present disclosure is not limited thereto, and the support member (220) is formed as a separate member from the upper elastic member (150). When the support member (220) is formed as a separate member, the support member (220) is formed with a leaf spring, a coil spring, a suspension wire and any member capable of elastically supporting the upper elastic member (150).

Meantime, the upper and bottom elastic member (150, 160), the bobbin (110) and the housing (140) are assembled by a bonding operation using heat fusion and/or adhesive agent. At this time, the fixing operation is finished by bonding using an adhesive agent after fixation using heat fusion according to assembly order.

For example, when the bobbin (110) and the inner frame (161) of the bottom elastic member (150) are initially assembled, and then the housing (140) and the outer frame (162) of the bottom elastic member (160) are secondly assembled, the bottom support protrusion (114) of the bobbin (110), the second through hole (161a) coupled thereto and the fourth through hole (162a) coupled to the bottom frame support protrusion (145) of the housing (140) is fixed by heat fusion. Thirdly, when the bobbin (110) and the inner frame (151) of the upper elastic member (150) are initially assembled, the upper support protrusion (113) of the bobbin (110) and the first through hole (151a) coupled thereto is fixed by heat fusion. Lastly and fourthly, when the housing (140) and the outer frame (152) of the upper elastic member (150) are fixed, the third through hole (152a) coupled to the upper frame support protrusion (144) of the housing (140) is bonded by coating using an adhesive agent such as epoxy and the like.

However, these assembly orders may be changed. That is, the first to third fixing assembly processes of may be performed by heat fusion and the last and fourth step of fixing process may be performed by bonding. This is because there may be involved with deformation such as twist at the time of heat fusion, and the last step can complement the deformation by bonding.

Particularly, as mentioned above, in view of the fact that the upper elastic member (150) is provided with a bisected structure, the number of upper support protrusions (113) may be formed greater than that of the bottom support protrusions (114) to prevent a floating phenomenon that may be generated at the time of separation of the upper elastic member (150).

The second lens moving unit (200), which is a handshake correction lens moving unit, may include a first lens moving (100), a base (210), a support member (220), a second coil (230) and a position detection sensor (240), and may further include a circuit board (250).

The first lens moving unit (100) is configured as mentioned above, and may be replaced with an optical system configured to realize an auto focusing function using other methods than the above configuration. That is, instead of using the auto focusing actuator of VCM method, the first lens moving unit (100) may be configured with an optical system using a single lens moving actuator or an actuator of reflective index-changeable method. That is, the first lens moving unit (100) may be used by any optical actuator capable of performing an auto focusing function. However, there may be a requirement that a magnet (130) be installed at a position opposite to that of the second coil (230).

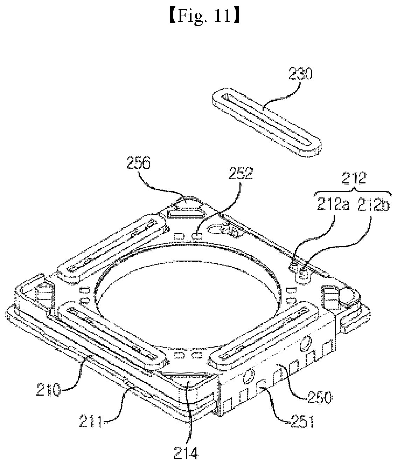

Referring to FIGS. 11 to 14, the base (210) may take an approximate square shape, and include the support member (220) at four corner areas. The base (210) is provided with a plurality of first groove parts (211) configured to inject an adhesive agent therein when fixing the cover member (300) using an adhesive agent. At least one first groove part (211) is formed at a surface not opposite to that of a terminal surface (250a) of the circuit board (250, described later). A surface opposite to that of the terminal surface (250a) of the base is formed with a terminal surface support groove (210a) having a size corresponding to that of the terminal surface (250a). The terminal surface support groove (210a) is concavely and inwardly formed from a periphery of the base (210) at a predetermined depth to prevent the terminal surface (250a) from protruding to outside or to adjust a protruding amount.

Furthermore, the base (210) is formed at a circumferential surface with a staircase (210b) to guide the cover member (300) coupled to an upper side of the staircase (210b), and is coupled to allow a distal end of the cover member to be surface-contacted. At this time, distal ends of the staircase (210b) and the cover member (300) may be bonded, fixed and sealed using an adhesive agent.

The base (210) is protrusively formed at an upper surface with a plurality of guide protrusions (212), where the guide protrusion is provided as a first guide protrusion (212a) and/or a second guide protrusion (212b). The first guide protrusion (212a) and the second guide protrusion (212b) may be changed in positions if necessary. The inwardly arranged first guide protrusion (212a) may guide a design position of the circuit board (250), and the second guide protrusion (212b) may guide an inner circumferential surface of the second coil (230).

In the present exemplary embodiment, a total of four second coils (230) is provided, and a total of eight guide protrusions (212) is provided including the first and second guide protrusions (212a, 212b). That is, the first and second guide protrusions (212a, 212b) may, in a pair, guide the circuit board (250) and the second coil (230). Furthermore, each of the first and second guide protrusions (212a, 212b) may guide the circuit board (250) and/or the second coil (230) according to design.

Furthermore, the base (210) is concavely formed at an upper surface with a support member recess groove (214) configured to insert the support member (220) thereinto. The support member recess groove (214) is coated with an adhesive agent to fix the support member (220) lest the support member (220) be moved. The support member recess groove (214) is inserted and fixed by a distal end of the support member (220).

Furthermore, the base (210) is provided at an upper surface with a detection sensor recess groove (215) arrangeable with the detection sensor (240). In the present exemplary embodiment, a total of two detection sensor recess grooves (215) is provided, where the detection sensor (240) is arranged at the detection sensor recess groove (215) to detect the degree of movement of the first lens moving unit (100) to the second and third directions. To this end, two detection sensor recess grooves (215) is arranged to allow an angle formed by an imaginary line connecting a center of the detection sensor recess groove (215) and a center of the base to be at 90°.

At least one surface of the detection sensor recess grooves (215) are formed with a tapered-off inclined surface (215a) to facilitate a smooth injection of epoxy for assembling the detection sensor (240). Furthermore, the detection sensor recess grooves (215) may not be injected a separate epoxy, but the epoxy is injected to fix the detection sensor (215). A position of the detection sensor recess grooves (215) may be at a center of the second coil (230) or may be near a center of the second coil (230). Alternatively, a center of the second coil (230) may match a center of the detection sensor (240).

Meanwhile, as illustrated in FIG. 14, a recess unit (260) mounted with a filter (not shown) may be formed at a border area at a bottom surface of the base (210). The filter may be an UV filter. However, the present disclosure is not limited thereto, and a filter may be arranged at the recess unit (260) of the base (210) using a separate sensor holder (not shown) as a medium. Furthermore, the recess unit (260) of the base (210) may be coupled by a sensor substrate (not shown) mounted with an image sensor (not shown) to constitute a camera module.

Referring to FIGS. 3 and 10, the support member (220) is coupled to the base (210) by being bent at the assembly step while being integrally formed at four corner areas of the upper elastic member (150). A distal end of the support member (220) is inserted into the support member recess groove (214) to be fixed by epoxy and the like.

According to the present exemplary embodiment, four support members (220) are formed as the support members (220) are formed at four corner areas of the upper elastic member (150). However, the present disclosure is not limited thereto, and a total of eight support members (220) may be formed when two support members (220) are formed at each corner area of the upper elastic member (150). The support member (220) according to the exemplary embodiment includes a connection unit (221), a first and a second elastic deformation unit (222, 223), a fixation unit (224) and a damping connection unit (225), and at least two support members (220) out of the four support members (220) may include a terminal unit (226).

Furthermore, when the support member (220) is formed as a member separate from the upper elastic member (150), the connection unit (221) may be a part where the support member (220) and the upper elastic member (150) are electrically connected.

In an embodiment not according to the claimed invention illustrated in FIG. 10, the first elastic deformation unit (222) is provided in an N shape formed with a straight unit to a direction parallel with an optical axis through four times of bending, and the second elastic deformation unit (223) is also formed in a corresponding shape as that of the first elastic deformation unit.

The first and second elastic deformation units (222, 223) according to the invention are formed in one unit instead of two separate units, and are also formed as a pattern-less suspension wire.

The first and second elastic deformation units (222, 223) may be minutely deformed to a direction the housing (140) moves when the housing (140) moves to the second and third directions perpendicular to the optical axis. Then, the housing (140) can move only to the second and third directions which are plain surfaces perpendicular to the optical axis with almost no position change relative to the first direction which is a direction parallel with the optical axis, whereby accuracy of handshake correction can be enhanced

The fixation unit (224) is provided at a distal end of the support member (220). The fixation unit (224) is inserted into the support member recess groove (214) of the base (210) and is fixed and coupled by adhesion member such as epoxy. However, the present disclosure is not limited thereto, and the fixation unit (224) is press-fitted into the support member recess groove (214) by forming the fixation unit (224) to match to the support member recess groove (214) formation -wise.

The damping connection unit (225) is arranged in the middle of the elastic deformation units (222, 223) and a distal end of the damping connection unit (225) is arranged at a space part (S) formed via a diaphragm (227) formed at the housing (140). Furthermore, the damping connection unit (225) is arranged at any position of the support member (220) between the connection unit (221) and the fixation unit (224).

The space part (S) is formed by three surfaces formed by a floor surface of the base (210), the diaphragm (227) and a lateral wall of the housing (140), and the damping connection unit (225) arranged in the space part (S) is coated with silicone for damping. At this time, the silicone is coated after inclining the housing (140) to allow the three surfaces to be positioned downwards at the silicone coating step, whereby the silicone is prevented from flowing down. Furthermore, the silicone is so made as to maintain a gel state in order to allow the damping connection unit (225) to be in an incompletely fixed state. Thus, the damping connection unit (225) may move little by little in response to the movement of the elastic deformation units (222, 223) to allow absorbing a minute vibration transmitted from the elastic deformation units (222, 223).

The damping connection unit (225) is formed in a hook shape, where a distal end thereof can climb over the diaphragm (227). The present disclosure is not limited thereto, and the damping connection unit (225) is formed in a straight line to be arranged at a space part side.

As noted above, the upper elastic member (150) is divided to a bisected first upper elastic member (150a) and second upper elastic member (150b). Thus, a terminal unit (226) is provided to supply an electric power to the first upper elastic member (150a) and second upper elastic member (150b). The terminal unit (226) is formed only at two members of the four support members (220), because the terminal (226) only needs a positive (+) electric power or a negative electric (-).

Referring to FIG. 10, the terminal unit (226) is formed by bending at least once a plate-shaped member extended from the fixation unit (224). The terminal unit (226) is conductively connected to a pad (256) provided at the PCB (250) using a soldering method and the like. To this end, a surface of the terminal unit (226) and a surface of the pad (256) is arranged to face each other. At this time, the terminal unit (226) and the pad (256) may surface-contact each other, and as illustrated in FIG. 10, a conductive member like a solder is interposed between the terminal unit (226) and the pad (256). The support member (220) can supply an electric power of mutually different polarities to the upper elastic member (150) through the coupling between the terminal unit (226) and the pad (256), whereby a fixation power towards the base (210) of the support member (220) can be simultaneously increased.

The second coil (230) is arranged to face the magnet (130) fixed at the housing (140). For example, the second coil (230) may be arranged at an external side of the magnet (130). Alternatively, the second coil (230) may be spaced apart from downward side of the magnet (130) at a predetermined distance. In the present exemplary embodiment, a total of four second coils (230) is installed at four surfaces. However, the present disclosure is not limited thereto, and only one for second direction and one for third direction may be installed, and four or more second coils may be installed.

Furthermore, the second coil (230) may be formed by winding a doughnut-shaped wire, and as illustrated in FIG. 13, a start line (231) and an end line (232) of the second coil (230) may be conductively connected to a terminal (252) formed on the circuit board (250). The second coil (230) may be installed at an upper surface of the circuit board (250) arranged at an upper side of the base (210). However, the present disclosure is not limited thereto, and the second coil (230) may be tightly connected to the base (210).

In the present exemplary embodiment, the second coil (230) is guided in installation position thereof by first and second guide protrusions (212a, 212b) protrusively formed on an upper surface of the base (210).

The detection sensor (240) may be arranged at a center of the second coil (230) to detect the movement of the housing (140). The detection sensor (240) may be provided as a Hall sensor, and any sensor may be used for the detection sensor (240) as long as it can detect a change in magnetic force. The detection sensor (240) may be mounted at a bottom surface of the circuit board (250), where the mounted detection sensor (240) may be inserted into a detection sensor recess groove (215) formed at the base (210). The bottom surface of the circuit board (250) may be an opposite surface of a surface arranged with the second coil (230).

The circuit board (250) may be coupled to an upper surface of the base (210), and may be guide in installation position by the first guide protrusion (212a) as described above. The circuit board (250) may be formed with at least one bent terminal surface (250a). In the present exemplary embodiment, the circuit board is formed with two bent terminal surfaces (250a). The terminal surface (250a) may be arranged with a plurality of terminals (251) to supply a current to the first and second coils (120, 230) by receiving an external electric power. The number of terminals formed on the terminal surface (250a) may be increased or decreased depending on types of elements necessary for control. Meantime, according to the present exemplary embodiment, the PCB may be replaced with an FPCB (Flexible PCB). The present disclosure however is not limited thereto, and the terminal of the circuit board (250) may be directly formed on a surface of the base (210) by using a surface electrode method.

Furthermore, the circuit board (250) may be formed with an escape groove (254) to pass therethrough one of the start line (231) and the end line (232) of the second coil (230). The escape groove (254) may be formed with a space for passing a line extracted from an inner lateral surface of the second coil (230) out of the start line (231) and the end line (232) of the second coil (230). The inner lateral surface of the second coil (230) may be a surface contacted by the second coil (230) and the circuit board (250), That is, as illustrated in FIG. 13, one of the start line (231) and the end line (232) of the second coil (230) may be extracted from the floor surface of the second coil (230). However, when the start line (231) is extracted from a periphery of the second coil (230), the end line (232) may be extracted from an inner surface of the second coil (230).

At this time, in view of the fact that the end line (232) is also extracted from the floor surface of the second coil (230), when the end line (232) is extracted from the inner surface of the second coil (230) to the outside, the end line (232) must pass through the floor surface of the second coil (230). Thus, when the end line (232) is extracted from the floor surface of the second coil (230), the second coil (230) may not be horizontally installed because of thickness of the end line. Thus, the escape groove (254) may be formed on the circuit board (250) in a predetermined shape to allow an entire floor surface of the second coil (230) to always surface-contact an entire surface of an installation surface, whereby a space unit is made to be formed at a floor surface side near a distal end of the second coil (230) as high as a height of the escape groove (254). Then, the end line (232) may pass the space unit to be extracted to outside of the second coil (230).

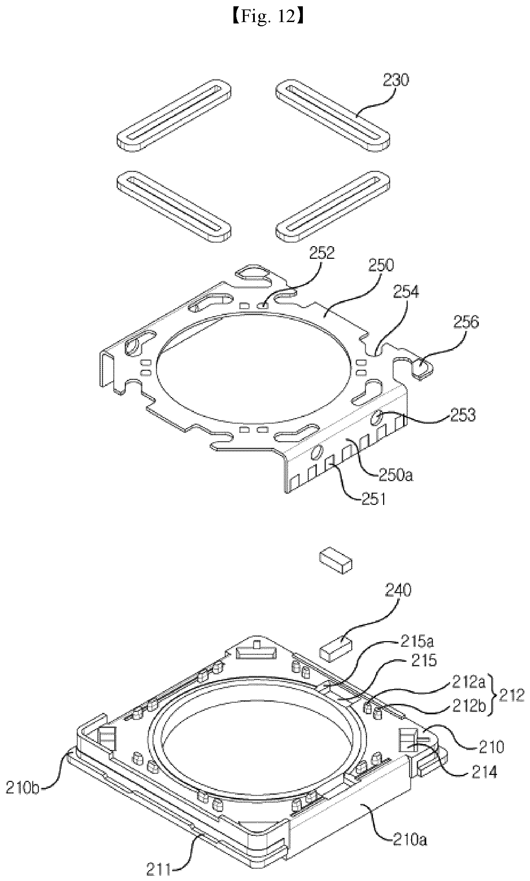

The circuit board (250) may be installed near a corner with a pad (256) conductively connected to the terminal unit (226) provided at the support member (220). The pad (256) made of a conductive material is formed at an upper surface of an angled portion of the corner of the circuit board (250) may be connected to an electric circuit (not shown) inside the circuit board (250), or may be connected to two leader lines of the first coil (120). Meanwhile, two corners of the four corners of the circuit board (250) may be formed with the pad (256), and the remaining two corners may be free from the pad (256). The corner portions of no pads (256) may still maintain the angle shape, but may form chamfered corners as illustrated in FIG. 12.

Meanwhile, the detection sensor (240) may be arranged at a center side of the second coil (230) with the circuit board (250) being situated therebetween. That is, the detection sensor (240) may not be directly connected to the second coil (230), but the second coil (230) may be formed at an upper surface of the circuit board (250) and the detection sensor may be formed at a bottom surface of the circuit board (250). According to the present exemplary embodiment, the detection sensor (240), the second coil (230) and the magnet (130) may be preferably arranged on a same axis, whereby the second coil (230) may move the housing (140) to the second and third directions to perform the handshake correction function.

The cover member (300) may be formed in an approximate box shape, and may encompass the first and second lens moving units (100, 200). At this time, as illustrated in FIG. 1, the cover member (300) may be formed at a position opposite to that of the first groove part (211) of the base (210) with a second groove unit (310), and a groove unit of a predetermined area may be formed by coupling of the first and second groove parts (211, 310). The groove unit may be coated with an adhesive member having a viscosity. That is, the adhesive member coated on the groove unit can fill up a gap formed by opposite surfaces of the cover member (300) and the base (210) using the groove unit, whereby the cover member (300) and the base (210) may be coupled to be sealed together.

Furthermore, a surface opposite to the terminal surface (250a) of the circuit board (250) at the cover member (300) may be formed with a third groove unit (320) to prevent interference with the plurality of terminals (251) formed at the terminal surface (250a). The third groove unit (320) may be concavely formed on an entire surface opposite to the terminal surface (250a), and the adhesive member may be inwardly coated to seal the cover member (300), the base (140) and the circuit board (250).

Meanwhile, the first, second and third groove parts (211, 310, 320) may be respectively formed at the base (140) and the cover member (300). However, the present disclosure is not limited thereto, and a similar shape to that of the first, second and third groove parts (211, 310, 320) may be formed only on the base (140) or only on the cover member (300).

Meanwhile, as illustrated in FIG. 14, the base (140) may be formed at a bottom surface with a concave groove part (270) on which a filter (not shown) may be installed. Furthermore, an image sensor (not shown) may be arranged between the PCB (not shown) and the groove part (270). A camera module may be formed by assembling a lens barrel (not shown) to the bobbin (110). Alternatively, the base (210) may further include a separately-formed image sensor holder (not shown) at a bottom surface thereof. Furthermore, the base may be downwardly extended to directly couple an image sensor-mounted camera module substrate (not shown) to a floor surface side. Furthermore, the camera module may be applied to a mobile device such as a mobile phone.

Thus, according to the abovementioned configuration, the magnet (130) may be shared to realize the auto focusing operation and the handshake correction operation of the first and second lens moving units (100, 200) to reduce the number of parts and to enhance the responsiveness by reducing the weight of the housing (140). Of course, an auto focusing magnet and a handshake correction magnet may be separately formed. Furthermore, the support member (220) may be integrally formed with the upper elastic member (150), and bent to reduce the weight and to enhance the assemblage. Furthermore, an outside minute vibration transmitted to the support member (220) may be absorbed by using silicone, whereby a more accurate handshake correction control can be accomplished.

## Claims

1. A lens moving unit, comprising:
a base (210);
a second coil (230) disposed on the base (210);
a first lens moving unit (100) comprising a housing (140) disposed on the base (210), a magnet (130) disposed on the housing (140), a bobbin (110) disposed in the housing (140) and a first coil (120) disposed on a periphery of the bobbin (110) and configured to move the bobbin (110) in an optical axis direction, wherein the housing (140) comprises a lower surface facing the base (210) and an upper surface opposite to the lower surface;
an upper elastic member (150) coupling the upper surface of the housing (140) and an upper surface of the bobbin (110);
a support member (220) movably supporting the first lens moving unit (100) in a direction perpendicular to the optical axis direction, wherein the support member (220) is connected to a corner area of the upper elastic member (150); and
wherein the support member (220) further includes a connection unit (221), first and second elastic deformation units (222,223) and a fixation unit (224) and a damping connection unit (225),
wherein the first and second elastic deformation units (222, 223) are formed in one unit, as a pattern-less suspension wire,
**characterized in that**:
the connection unit (221) is a unit configured to connect with a corner surface of the upper elastic member (150),
the fixation unit (224) is fixedly coupled to a support member recess groove (214) formed at the base (210),
the damping connection unit (225) is arranged at a position of the support member (220) between the connection unit (221) and the fixation unit (224) and a distal end of the damping connection unit (225) is arranged at a space part (S) formed via a diaphragm (227), which is formed at the housing (140), and
the damping connection unit (225) arranged in the space part (S) is coated with silicone for damping.

2. The lens moving unit of claim 1, comprising a bottom elastic member (160) connecting a lower surface of the bobbin (110) and a lower surface of the housing (140) to move the bobbin (110) and the first coil (120) in the optical axis direction,
wherein the support member recess groove (214) is formed on a corner area of the base (210).

3. The lens moving unit of claim 1 or 2, comprising:
a circuit board (250) disposed on the base (210); and
a detection sensor (240) configured to detect a position of the housing (140) in the direction perpendicular to the optical axis direction,
wherein the support member (220) comprises a plurality of support members (220) configured to supply an electric power to the first coil (120) from the circuit board (250).

4. The lens moving unit of any one of claims 1 to 3, wherein the bobbin (110) comprises a first stopper (111) protrusively formed in an upward direction configured to prevent collision of the bobbin (110) and a second stopper (112) formed in a circumferential direction configured to prevent rotation of the bobbin (110), and
wherein the support member (220) is integrally formed with the upper elastic member (150) and is configured to be coupled to the base (210).

5. The lens moving unit of any one of claims 1 to 4, wherein the damping connection unit (225) is formed in a hook shape, where a distal end thereof is climbed over the diaphragm (227).

6. The lens moving unit of any one of claims 1 to 5, wherein the second coil (230) is guided in installation position thereof by first and second protrusions (212a, 212b) protrusively formed on an upper surface of the base (210).

7. The lens moving unit of any one of claims 1 to 6, wherein the housing (140) comprises an escape groove (142a) concavely formed to prevent the support member (220) from interfering with the housing (140).

8. The lens moving unit of claim 7, wherein the housing (140) comprises a staircase (142b) formed at an upper side of the escape groove (142a) to support the support member (220).

9. The lens moving unit of claim 4, comprising a cover member (300) configured to encompass the bobbin (110) and the housing (140) by being coupled to the base (210).

10. The lens moving unit of claim 9, wherein the first stopper (111) is protrusively formed at an upper surface of the bobbin (110) with a first height, and the second stopper (112) is protrusively formed at a lateral surface of the upper surface of the bobbin (110), thereby preventing the bobbin (110) from colliding with the base (210) and the cover member (300), respectively.

11. The lens moving unit of claim 9 or 10, wherein the housing (140) comprises a third stopper (143) protrusively formed from the upper surface of the housing (140) to prevent the upper surface of the housing (140) from colliding with the cover member (300).

12. The lens moving unit of claim 4, wherein the housing (140) comprises a recess groove (146) at a position opposite to that of the second stopper (112) to receive the second stopper (112) and to restrict rotation of the second stopper (112).

13. The lens moving unit of claim 3, wherein the circuit board (250) is installed near a corner with a pad (256) conductively connected to a terminal unit (226) provided at the support member (220).

14. The lens moving unit of claim 1, wherein the silicone is directly contacted with both the housing (140) and the support member (220).

15. A camera module, **characterized by**:
an image sensor;
a PCB (250) mounted with the image sensor; and
the lens moving unit of any one of claims 1 to 14.

## Patentansprüche

1. Linsenbewegungseinheit, umfassend:
eine Basis (210);
eine zweite Spule (230), die auf der Basis (210) angeordnet ist;
eine erste Linsenbewegungseinheit (100), umfassend ein auf der Basis (210) angeordnetes Gehäuse (140), einen an dem Gehäuse (140) angeordneten Magnet (130), einen in dem Gehäuse (140) angeordneten Spulenkörper (110) und eine erste Spule (120), die an einem Umfang des Spulenkörpers (110) angeordnet und konfiguriert ist, um den Spulenkörper (110) in einer Richtung der optischen Achse zu bewegen, wobei das Gehäuse (140) eine der Basis (210) zugewandte untere Oberfläche und eine der unteren Oberfläche gegenüberliegende obere Oberfläche umfasst;
ein oberes elastisches Element (150), das die obere Oberfläche des Gehäuses (140) und eine obere Oberfläche des Spulenkörpers (110) koppelt;
ein Stützelement (220), das die erste Linsenbewegungseinheit (100) in einer Richtung senkrecht zur Richtung der optischen Achse beweglich stützt, wobei das Stützelement (220) mit einem Eckbereich des oberen elastischen Elements (150) verbunden ist; und
wobei das Stützelement (220) ferner eine Verbindungseinheit (221), eine erste und eine zweite elastische Verformungseinheit (222, 223) und eine Fixierungseinheit (224) und eine Dämpfungsverbindungseinheit (225) einschließt,
wobei die erste und die zweite elastische Verformungseinheit (222, 223) in einer Einheit als ein musterloser Aufhängungsdraht ausgebildet sind,
**dadurch gekennzeichnet, dass**:
die Verbindungseinheit (221) eine Einheit ist, die konfiguriert ist, um sich mit einer Eckoberfläche des oberen elastischen Elements (150) zu verbinden,
die Fixierungseinheit (224) fest an eine an der Basis (210) ausgebildete Stützelement-Aussparungsnut (214) gekoppelt ist,
die Dämpfungsverbindungseinheit (225) an einer Position des Stützelements (220) zwischen der Verbindungseinheit (221) und der Fixierungseinheit (224) platziert ist und ein distales Ende der Dämpfungsverbindungseinheit (225) an einem Raumteil (S) platziert ist, das über eine Membran (227) ausgebildet ist, die an dem Gehäuse (140) ausgebildet ist, und
die in dem Raumteil (S) platzierte Dämpfungsverbindungseinheit (225) zur Dämpfung mit Silikon beschichtet ist.

2. Linsenbewegungseinheit nach Anspruch 1, umfassend ein elastisches Bodenelement (160), das eine untere Oberfläche des Spulenkörpers (110) und eine untere Oberfläche des Gehäuses (140) verbindet, um den Spulenkörper (110) und die erste Spule (120) in der Richtung der optischen Achse zu bewegen,
wobei die Stützelement-Aussparungsnut (214) an einem Eckbereich der Basis (210) ausgebildet ist.

3. Linsenbewegungseinheit nach Anspruch 1 oder 2, umfassend:
eine auf der Basis (210) angeordnete Leiterplatte (250); und
einen Detektionssensor (240), der konfiguriert ist, um eine Position des Gehäuses (140) in der Richtung senkrecht zu der Richtung der optischen Achse zu detektieren,
wobei das Stützelement (220) eine Vielzahl von Stützelementen (220) umfasst, die konfiguriert sind, um der ersten Spule (120) von der Leiterplatte (250) eine elektrische Leistung zuzuführen.

4. Linsenbewegungseinheit nach einem der Ansprüche 1 bis 3, wobei der Spulenkörper (110) einen ersten Anschlag (111), der in einer Aufwärtsrichtung vorspringend ausgebildet und konfiguriert ist, um eine Kollision des Spulenkörpers (110) zu verhindern, und einen zweiten Anschlag (112), der in einer Umfangsrichtung ausgebildet und konfiguriert ist, um eine Drehung des Spulenkörpers (110) zu verhindern, umfasst, und
wobei das Stützelement (220) einstückig mit dem oberen elastischen Element (150) ausgebildet ist und konfiguriert ist, um an die Basis (210) gekoppelt zu sein.

5. Linsenbewegungseinheit nach einem der Ansprüche 1 bis 4, wobei die Dämpfungsverbindungseinheit (225) in einer Hakenform ausgebildet ist, wobei ein distales Ende derselben über die Membran (227) greift.

6. Linsenbewegungseinheit nach einem der Ansprüche 1 bis 5, wobei die zweite Spule (230) in einer Einbauposition derselben durch erste und zweite Vorsprünge (212a, 212b) geführt wird, die vorspringend auf einer oberen Oberfläche der Basis (210) ausgebildet sind.

7. Linsenbewegungseinheit nach einem der Ansprüche 1 bis 6, wobei das Gehäuse (140) eine Ausweichnut (142a) umfasst, die konkav ausgebildet ist, um zu verhindern, dass das Stützelement (220) das Gehäuse (140) behindert.

8. Linsenbewegungseinheit nach Anspruch 7, wobei das Gehäuse (140) eine an einer oberen Seite der Ausweichnut (142a) ausgebildete Treppe (142b) umfasst, um das Stützelement (220) zu stützen.

9. Linsenbewegungseinheit nach Anspruch 4, umfassend ein Abdeckelement (300), das konfiguriert ist, um den Spulenkörper (110) und das Gehäuse (140) zu umschließen, indem es an die Basis (210) gekoppelt ist.

10. Linsenbewegungseinheit nach Anspruch 9, wobei der erste Anschlag (111) an einer oberen Oberfläche des Spulenkörpers (110) mit einer ersten Höhe vorspringend ausgebildet ist, und der zweite Anschlag (112) an einer seitlichen Oberfläche der oberen Oberfläche des Spulenkörpers (110) vorspringend ausgebildet ist, wodurch jeweils verhindert wird, dass der Spulenkörper (110) mit der Basis (210) und dem Abdeckelement (300) kollidiert.

11. Linsenbewegungseinheit nach Anspruch 9 oder 10, wobei das Gehäuse (140) einen dritten Anschlag (143) umfasst, der vorspringend von der oberen Oberfläche des Gehäuses (140) ausgebildet ist, um zu verhindern, dass die obere Oberfläche des Gehäuses (140) mit dem Abdeckelement (300) kollidiert.

12. Linsenbewegungseinheit nach Anspruch 4, wobei das Gehäuse (140) eine Aussparungsnut (146) an einer Position gegenüber derjenigen des zweiten Anschlags (112) umfasst, um den zweiten Anschlag (112) aufzunehmen und eine Drehung des zweiten Anschlags (112) zu begrenzen.

13. Linsenbewegungseinheit nach Anspruch 3, wobei die Leiterplatte (250) in der Nähe einer Ecke mit einem Pad (256) installiert ist, das leitfähig mit einer an dem Stützelement (220) bereitgestellten Anschlusseinheit (226) verbunden ist.

14. Linsenbewegungseinheit nach Anspruch 1, wobei das Silikon sowohl mit dem Gehäuse (140) als auch mit dem Stützelement (220) in direktem Kontakt steht.

15. Kameramodul, **gekennzeichnet durch:**
einen Bildsensor;
eine an dem Bildsensor montierte Leiterplatte (250); und
die Linsenbewegungseinheit nach einem der Ansprüche 1 bis 14.

## Revendications

1. Une unité de déplacement de lentille, comprenant :
un socle (210) ;
une deuxième bobine (230) disposée sur le socle (210) ;
une première unité de déplacement de lentille (100) comprenant un boîtier (140) disposé sur le socle (210), un aimant (130) disposé sur le boîtier (140), un support de lentille (ll0) disposé dans le boîtier (140) et une première bobine (120) disposée à la périphérie du support de lentille (ll0) et configurée pour déplacer le support de lentille (ll0) dans une direction de l'axe optique, le boîtier (140) comprenant une surface inférieure faisant face au socle (210) et une surface supérieure opposée à la surface inférieure ;
un élément élastique supérieur (150) reliant la surface supérieure du boîtier (140) et une surface supérieure du support de lentille (ll0) ;
un élément de support (220) supportant de manière mobile la première unité de déplacement de lentille (100) dans une direction perpendiculaire à la direction de l'axe optique, l'élément de support (220) étant relié à une zone d'angle de l'élément élastique supérieur (150) ; et
l'élément de support (220) comprenant en outre une unité de liaison (221), des première et deuxième unités de déformation élastique (222, 223), une unité de fixation (224) et une unité de liaison d'amortissement (225),
les première et deuxième unités de déformation élastique (222, 223) étant formées d'une seule pièce, sous la forme d'un fil de suspension sans motif,
**caractérisée en ce que**
l'unité de liaison (221) étant une unité configurée pour être reliée à une surface d'angle de l'élément élastique supérieur (150),
l'unité de fixation (224) étant fixée dans une rainure de logement de l'élément de support (214) formée dans le socle (210),
l'unité de liaison d'amortissement (225) étant disposée à un emplacement de l'élément de support (220) entre l'unité de liaison (221) et l'unité de fixation (224), et une extrémité distale de l'unité de liaison d'amortissement (225) étant disposée dans l'espace (S) formé par un diaphragme (227) ménagé dans le boîtier (140), et
l'unité de liaison d'amortissement (225) disposée dans l'espace (S) étant revêtue de silicone pour assurer l'amortissement.

2. L'unité de déplacement de lentille selon la revendication 1, comprenant un élément élastique inférieur (160) reliant une surface inférieure du support de lentille (110) et une surface inférieure du boîtier (140) afin de déplacer le support de lentille (110) et la première bobine (120) dans la direction de l'axe optique,
dans laquelle la rainure de logement de l'élément de support (214) est formée dans une zone d'angle du socle (210).

3. L'unité de déplacement de lentille selon la revendication 1 ou 2, comprenant :
une carte de circuit imprimé (250) disposée sur le socle (210) ; et
un capteur de détection (240) configuré pour détecter une position du boîtier (140) dans la direction perpendiculaire à la direction de l'axe optique,
dans laquelle l'élément de support (220) comprend plusieurs éléments de support (220) configurés pour alimenter électriquement la première bobine (120) depuis le circuit imprimé (250).

4. L'unité de déplacement de lentille selon l'une quelconque des revendications 1 à 3, dans laquelle le support de lentille (ll0) comprend une première butée (111) formée en saillie vers le haut et configurée pour empêcher la collision du support de lentille (110), ainsi qu'une deuxième butée (112) formée dans une direction circonférentielle et configurée pour empêcher la rotation du support de lentille (ll0), et
dans laquelle l'élément de support (220) est formé intégralement avec l'élément élastique supérieur (150) et est configuré pour être couplé au socle (210).

5. L'unité de déplacement de lentille selon l'une quelconque des revendications 1 à 4, dans laquelle l'unité de liaison d'amortissement (225) est en forme de crochet, son extrémité distale passant par-dessus le diaphragme (227).

6. L'unité de déplacement de lentille selon l'une quelconque des revendications 1 à 5, dans laquelle la deuxième bobine (230) est guidée jusqu'à sa position d'installation par des première et deuxième saillies (212a, 212b) formées en saillie sur une surface supérieure du socle (210).

7. L'unité de déplacement de lentille selon l'une quelconque des revendications 1 à 6, dans laquelle le boîtier (140) comprend une rainure de dégagement (142a) formée en creux afin d'empêcher l'élément de support (220) d'interférer avec le boîtier (140).

8. L'unité de déplacement de lentille selon la revendication 7, dans laquelle le boîtier (140) comprend une marche (142b) formée au-dessus de la rainure de dégagement (142a) pour soutenir l'élément de support (220).

9. L'unité de déplacement de lentille selon la revendication 4, comprenant un élément de couverture (300) configuré pour entourer le support de lentille (ll0) et le boîtier (140) en étant couplé au socle (210).

10. L'unité de déplacement de lentille selon la revendication 9, dans laquelle la première butée (l11) est formée en saillie sur une surface supérieure du support de lentille (ll0) à une première hauteur, et la deuxième butée (112) est formée en saillie sur une surface latérale de la surface supérieure du support de lentille (110), empêchant ainsi le support de lentille (110) d'entrer en collision avec le socle (210) et l'élément de couverture (300), respectivement.

11. Unité de déplacement de lentille selon la revendication 9 ou 10, dans laquelle le boîtier (140) comprend une troisième butée (143) formée en saillie à partir de la surface supérieure du boîtier (140) afin d'empêcher la surface supérieure du boîtier (140) d'entrer en collision avec l'élément de couverture (300).

12. L'unité de déplacement de lentille selon la revendication 4, dans laquelle le boîtier (140) comprend une rainure d'évidement (146) à une position opposée à celle de la deuxième butée (112) pour recevoir cette butée et en limiter la rotation.

13. Unité de déplacement de lentille selon la revendication 3, dans laquelle le circuit imprimé (250) est installé à proximité d'un coin, avec un plot connecté électriquement à une unité de borne (226) prévue sur l'élément de support (220).

14. Unité de déplacement de lentille selon la revendication 1, dans laquelle le silicone est directement en contact avec le boîtier (140) et l'élément de support (220).

15. Un module de caméra, **caractérisé par** :
un capteur d'image ;
un circuit imprimé (250) sur lequel est monté le capteur d'image ; et l'unité de déplacement de lentille selon l'une quelconque des revendications 1 à 14.
